# EUROPEAN PATENT SPECIFICATION

(11) **EP 1 933 473 B1**
(45) Date of publication and mention of the grant of the patent: **03.04.2013**
(21) Application number: 07118153.1
(22) Date of filing: 09.10.2007
(51) Int. Cl.: H04W 52/34, H04W 52/28, H04W 52/50

(54) **Power assigning method and wireless base station apparatus using the method**
Leistungszuteilungsverfahren und drahtloses Basisstationsgerät mit dem Verfahren
Procédé d'affectation de puissance et appareil de station de base sans fil utilisant le procédé

(30) Priority: 12.12.2006 JP 2006334944
(43) Date of publication of application: 18.06.2008
(73) Proprietor: Fujitsu Ltd., Kawasaki-shi, Kanagawa 211-8588 (JP)
(72) Inventor: Sato, Hiroyoshi, Kawasaki-shi, Kanagawa 211-8588 (JP); Iioka, Toshinori, Kawasaki-shi, Kanagawa 211-8588 (JP); Senba, Teruhiko, Kawasaki-shi, Kanagawa 211-8588 (JP)
(74) Representative: Wilding, Frances Ward

(56) References cited:
- EP-A- 1 422 887
- EP-A- 1 531 557

## Description

### BACKGROUND OF THE INVENTION

### 1. Field of the Invention

The present invention relates a power assigning method and a wireless base station apparatus using the method. More particularly, the present invention relates to the power assigning method and the wireless base station apparatus using the method in a wireless communications system for calculating an index value based on line qualities between a plurality of mobile stations and the wireless base station apparatus to select a mobile station based on the index value and send data from the wireless base station apparatus.

### 2. Description of the Related Art

There are several wireless communications systems in which a line is shared by a plurality of users. In the following, IMT-2000 is described as an example of such a system.

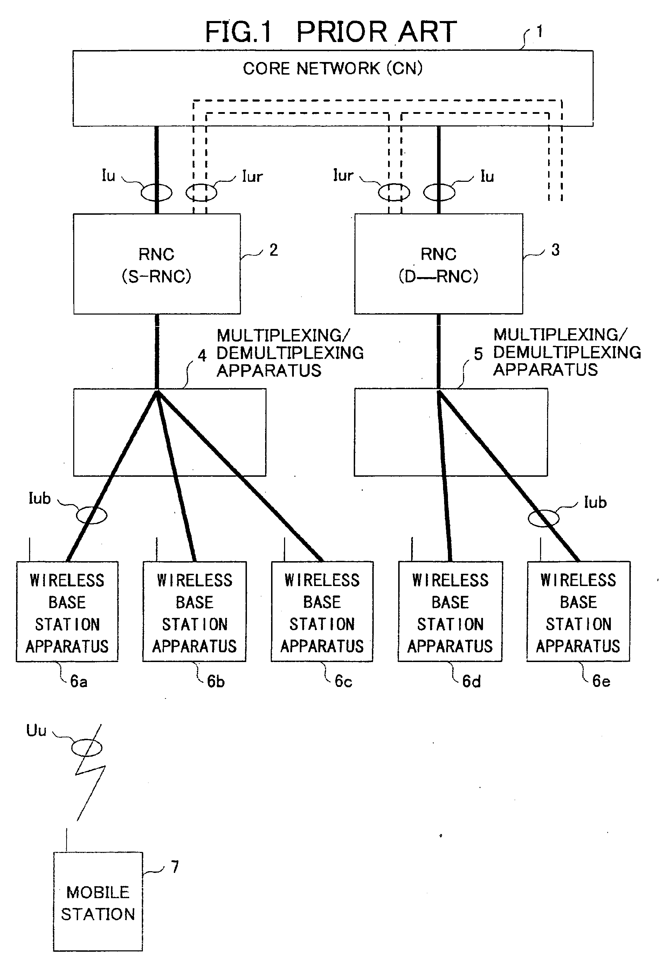

Fig. 1. is a block diagram of an example of a mobile communications system. In the figure, the mobile communications system includes a core network 1, wireless base station control apparatuses (each to be also referred to as RNC: Radio Network Controller) 2 and 3, multiplexing/demultiplexing apparatuses 4 and 5, wireless base station apparatuses (Node Bs) 6a-6e, and a mobile station (to be also referred to as UE: User equipment) 7.

The core network 1 is a network for performing routing in the mobile communications system. The core network 1 is formed by an ATM switching network, a packet switching network, a router network and the like. By the way, the core network 1 is connected to another public network such as a public switched telephone network (PSTN) and the like so that the mobile station 7 can communicate with a fixed telephone and the like.

Each of the wireless base station control apparatuses 2 and 3 is positioned as an upper apparatus of a wireless base station apparatus and includes control functions for controlling wireless resources used by the wireless base station apparatus. In addition, each of the wireless base station control apparatuses 2 and 3 includes a handover control function for receiving signals of the mobile station 7 from a plurality of wireless base station apparatuses under the wireless base station control apparatus to select one of the signals which has better quality and send the signal to the core network 1 when the mobile station 7 performs handover.

Each of the multiplexing/demultiplexing apparatuses 4 and 5 is provided between a wireless base station control apparatus and a wireless base station apparatus. The multiplexing/demultiplexing apparatus separates a signal received from a wireless base station control apparatus to output signals to each wireless base station apparatus. Also, the multiplexing/demultiplexing apparatus multiplexes signals from a plurality of wireless base station apparatuses to send a multiplexed signal to the wireless base station control apparatus.

Wireless resources of each of the wireless base station apparatuses 6a-6c are managed by the wireless base station control apparatus 2, and wireless resources of each of the wireless base station apparatuses 6d and 6e are managed by the wireless base station control apparatus 3, so that each of the wireless base station apparatuses 6a-6e can perform wireless communications with the mobile station 7.

The mobile station 7 resides in a wireless area in one of the wireless base station apparatuses 6a-6e so as to establish a wireless line between the mobile station 7 and the wireless base station apparatus and perform communications with another communication apparatus via the core network 1.

By the way, an interface between the core network 1 and a wireless base station control apparatus is referred to as Iu interface, an interface between the wireless base station control apparatuses 2 and 3 is referred to as Iur interface, an interface between a wireless base station control apparatus and a wireless base station apparatus is referred to as Iub interface, an interface between a wireless base station apparatus and the mobile station 7 is referred to as Uu interface, and a network including a wireless base station control apparatus and a wireless base station apparatus is referred to as a wireless access network.

In addition, a line between the core network 1 and a wireless base station control apparatus (2, 3) is shared for the Iu interface and a plurality of Iur interfaces among a plurality of wireless base station control apparatuses, and a line between a wireless base station control apparatus (2, 3) and a multiplexing/demultiplexing apparatus (4, 5) is shared for Iub interfaces for a plurality of wireless base station apparatuses.

In addition, HSDPA (High Speed Downlink Packet Access) is adopted as a technique for performing downlink high speed packet communications. HSDPA adopts an adaptive modulation and coding (AMC) scheme in which the QPSK modulation scheme and the 16 QAM scheme are adaptively switched according to wireless environment between the wireless base station apparatus and the mobile station.

In addition, the HSDPA adopts a H-ARQ (Hybrid Automatic Repeat reQuest) scheme. In the H-ARQ, when the mobile station detects an error in data received from the wireless base station apparatus, the mobile station sends a retransmission request (NACK signal) to the wireless base station apparatus.

The wireless base station apparatus that receives the retransmission request retransmits data so that the mobile station performs error correction decoding using data already received and the retransmitted data. Accordingly, in H-ARQ, even though there is an error, already received data is effectively used so that gain for the error correction decoding is increased and the number of times of retransmission can be limited small as a result. By the way, when an ACK signal is received from the mobile station, retransmission is unnecessary since data transmission succeeds. Thus, next data transmission is performed.

Transmission power control in the conventional wireless base station apparatus is described in the following patent document 1, for example. In the transmission power control, transmission is performed with a predetermined initial power value during an initial period from transmission start, transmission power is increased according to retransmission requests from the mobile station in a stepwise fashion, then, after any retransmission request is not detected, increase of the transmission power is stopped.

The following patent document 2 discloses a transmission control method in which a base station sends retransmission data using a sub-carrier other than sub-carriers having low quality such that power of not-used sub-carriers is decreased and power for the sub-carrier to be used is increased.
[Patent Document 1] Japanese Laid-Open Patent Application No.2004-328394
[Patent Document 2] Japanese Laid-Open Patent Application No.2004-104574

European Patent Application No. 03255055.0 (Publication No. EP 1422887) discloses a method for dynamically varying the allocation and distribution of a base station's resources in response to fluctuations in demand for services. The method includes transmitting a status signal from a base station to a base station controller over an Iub interface. The status signal may correspond to the demand of the base station's transmit power for a data transmission service, such as HSDPA, and for at least another service, such as a dedicated voice channel. In response to receiving the usage information signal, the base station controller can vary the transmit power of the base station allocated for HSDPA and/or for the dedicated voice, data and/or both integrated voice and data channel. In response to receiving users' status information for HSDPA services, the base station controller may vary its call admission status for HSDPA and/or dedicated voice, data and/or both integrated voice and data users.

### SUMMARY OF THE INVENTION

### PROBLEM TO BE SOLVED BY THE PRESENT INVENTION

In a wireless base station apparatus, normal packet communications such as voice communications and i mode and the like are mainly performed by a main system, and high speed packet communications such as the HSDPA and the like are performed by a subsystem. In the wireless base station apparatus, a maximum transmission power is determined beforehand so that remaining power (= maximum transmission power - using power in the main system) that is not used for the normal packet communications in the main system is assigned to the high speed packet communications.

Assuming that, in order to perform high speed packet communications to a plurality of (n) mobile stations at the same time, the wireless base station apparatus newly performs high speed packet communications for a mobile station using a part of remaining power (equal to or less than 1/n), and that the new high speed packet cannot be received by the mobile station.

In this case, it is necessary that the wireless base station apparatus retransmits the packet with power greater than that (to be referred to as power A) for the initial transmission for the mobile station to be able to receive the packet without fail. However, when remaining power is not enough in the wireless base station apparatus, power to be assigned to the high speed packet communications in the retransmission is almost the same as the power A assigned to the initial high speed packet transmission. In this case, even though retransmission is performed, there is high possibility that the mobile station cannot receive the packet again, so there is a problem in that retransmission may be repeated.

The present invention is contrived in view of the above-mentioned points, and an object of the present invention is to improve receiving accuracy of retransmitted packets in the mobile station in the high speed packet communications so as to decrease repetition of packet retransmissions.

### MEANS FOR SOLVING THE PROBLEM

According to an embodiment of the present invention, a power assigning method for a wireless base station apparatus that includes a main system for performing normal packet communications between the wireless base station apparatus and mobile stations and includes a subsystem for performing high speed packet communications from the wireless base station apparatus to the mobile stations is provided. The method includes the steps of:
determining whether high speed packet communications are for initial transmission or for retransmission;
assigning, as transmission power for initial transmission of the high speed packet communications for a mobile station, a part of power obtained by subtracting power being used by the main system from a maximum transmission power of the wireless base station apparatus;
increasing transmission power to be assigned to retransmission of the high speed packet communications for the mobile station by a predetermined amount from power used in previous transmission, when the transmission power can be increased by the predetermined amount; and
increasing transmission power to be assigned to the retransmission by decreasing power used for the main system when the transmission power cannot be increased by the predetermined amount.

Also, according to an embodiment of the present invention, a wireless base station apparatus that includes a main system for performing normal packet communications between the wireless base station apparatus and mobile stations and includes a subsystem for performing high speed packet communications from the wireless base station apparatus to the mobile stations is provided. The wireless base station apparatus includes:
a control unit configured to determine whether high speed packet communications are for initial transmission or for retransmission;
an initial transmission power assigning unit configured to assign, as transmission power for initial transmission of the high speed packet communications for a mobile station, a part of power obtained by subtracting power being used by the main system from a maximum transmission power of the wireless base station apparatus;
a first transmission power increasing unit configured to increase transmission power to be assigned to retransmission of the high speed packet communications for the mobile station by a predetermined amount from power used in previous transmission when the transmission power can be increased by the predetermined amount; and
a second transmission power increasing unit configured to increase transmission power to be assigned to the retransmission by decreasing power used for the main system when the transmission power cannot be increased by the predetermined amount.

### EFFECT OF THE INVENTION

According to the present invention, retransmission packet receiving quality can be improved in a mobile station in high speed packet communications so that repetition of packet retransmission can be decreased.

### BRIEF DESCRIPTION OF THE DRAWINGS

Other objects, features and advantages of the present invention will become more apparent from the following detailed description when read in conjunction with the accompanying drawings, in which:
Fig.1 is a block diagram of an example of a mobile communications system;
Fig.2 is a block diagram of a wireless base station apparatus and a mobile station of a wireless communications system to which the present invention is applied;
Fig.3 is a block diagram of an embodiment of the baseband unit;
Fig.4 shows a flowchart of a power assigning process for high speed communication packets according to a first embodiment;
Fig.5 shows a flowchart of a power assigning process for high speed communication packets according to a second embodiment.

### DETAILED DESCRIPTION OF THE PREFERRED EMBODIMENTS

In the following, embodiments of the present invention are described with reference to figures.

### <Configuration of wireless base station apparatus and mobile station>

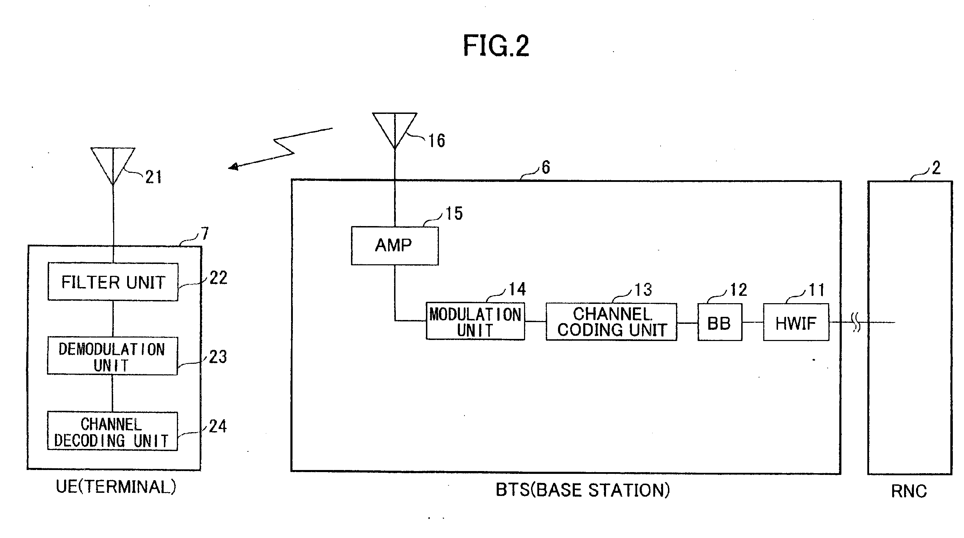

Fig.2 is a block diagram of a wireless base station apparatus 6 and a mobile station 7 of a wireless communications system to which the present invention is applied. As shown in the figure, the wireless base station apparatus 6 includes a highway interface 11, a baseband unit (BB) 12, a channel coding unit 13, a modulation unit 14 and an amplifier 15. The terminal 7 includes an antenna 21, a filter unit 22, a demodulation unit 23 and a channel decoding unit 24.

In the figure, data of normal packet communications such as voice communications and existing data communications and data of high speed packet communications are supplied to the highway interface (HMIF) 11 of the wireless base station apparatus 6, and the pieces of data are supplied to the baseband (BB) unit 12.

Each piece of data for which a transmission data amount, a modulation scheme and transmission power and the like are determined in the baseband unit 12 is supplied to the channel coding unit 13. The channel coding unit 13 encodes the data. Each piece of the encoded data is modulated in the modulation unit 14, and the power of the data is amplified by the amplifier (AMP) 15 and the data is transmitted from the antenna 16.

The filter unit 22 removes unnecessary frequency components from a signal received by the antenna 21 of the mobile station 7, and the signal is supplied to the demodulation unit 23. The signal demodulated in the demodulation unit 23 is decoded by the channel decoding unit 24 into a baseband signal and the baseband signal is supplied to circuits after that.

### <Configuration of the baseband unit>

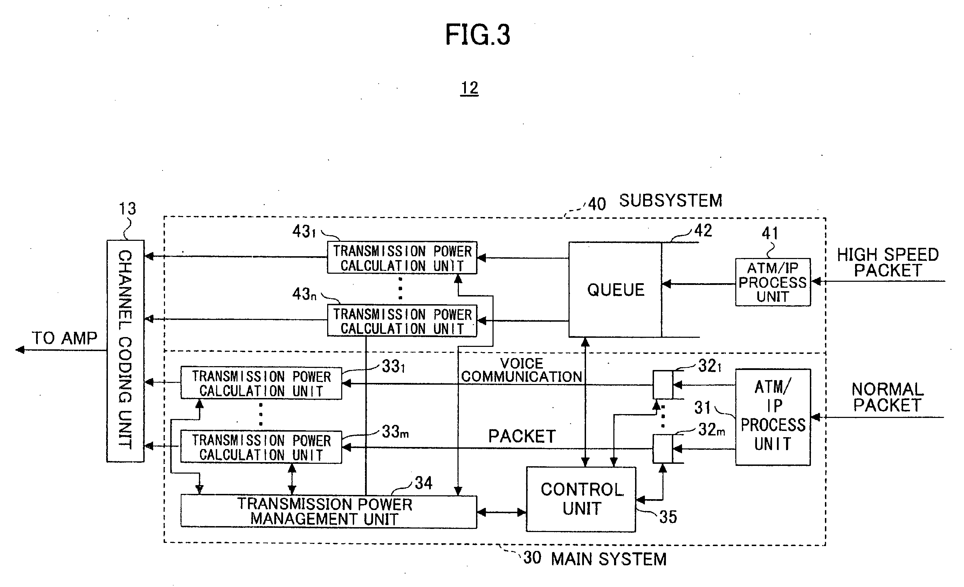

Fig.3 is a block diagram of an embodiment of the baseband unit 12. As shown in the figure, the baseband unit 12 includes a main system 30 and a subsystem 40. The main system 30 includes an ATM/IP process unit 31, queues 32₁- 32ₘ, transmission power calculation units 33₁- 33ₘ, a transmission power management unit 34 and a control unit 35. The subsystem 40 includes an ATM/IP process unit 41, a queue 42, and transmission power calculation units 43₁- 43ₙ.

The ATM/IP process unit 31 in the main system 30 converts ATM cells or IP packets of voice communications or existing data communications supplied from the highway interface 11 into packets for the normal packet communications for a wireless line to store the packets into queues 32₁- 32ₘ for each channel.

A packet is read from each of the queues 32₁- 32ₘ while being controlled by the control unit 35 to be supplied to each of the transmission power calculation units 33₁- 33ₘ. Each of the transmission power calculation units 33₁- 33ₘ receives an instruction from the control unit 35 via the transmission power management unit 34 to calculate transmission power of the packet by feedback control. The transmission power of each packet calculated here is supplied to the channel coding unit 13 with the packet. The transmission power for each channel calculated by the transmission power calculation units 33₁- 33ₘ is managed by the transmission power management unit 34 and it is reported to the control unit 35 from the transmission power management unit 34.

In addition, in the subsystem 40, the ATM/IP process unit 41 converts ATM cells or IP packets supplied from the highway interface 11 into packets for high speed packet communications for a wireless line, and the packets are stored in the queue 42. Packets are stored in the queues 42 for each channel, and a flag is added to each packet by the control unit 35 for indicating whether the packet is for initial transmission or for retransmission.

The wireless base station apparatus receives receive result information (ACK signal or NACK signal) and line quality information sent from the mobile station that is performing high speed packet communications by a receiving unit that is not shown in the figure. The control unit 35 is provided with the receive result information and the line quality information from the receiving unit. The control unit 35 selects n mobile stations that are sending targets based on line quality and transmission data rate of each mobile station. Namely, the control unit 35 performs scheduling. Then, packets of channels corresponding to the selected n mobile stations are read from the queue 42 and are supplied to the transmission power calculation units 43₁- 43ₙ.

Each of the transmission power calculation units 43₁- 43ₙ calculates transmission power of a channel and supplies the transmission power and the packet to the channel coding unit 13. Transmission powers of the channels calculated by the transmission power calculation units 43₁- 43ₙ are managed by the transmission power management unit 34 and the transmission power is reported to the control unit 35 from the transmission power management unit 34.

### <Flowchart of a first embodiment of the power assigning process>

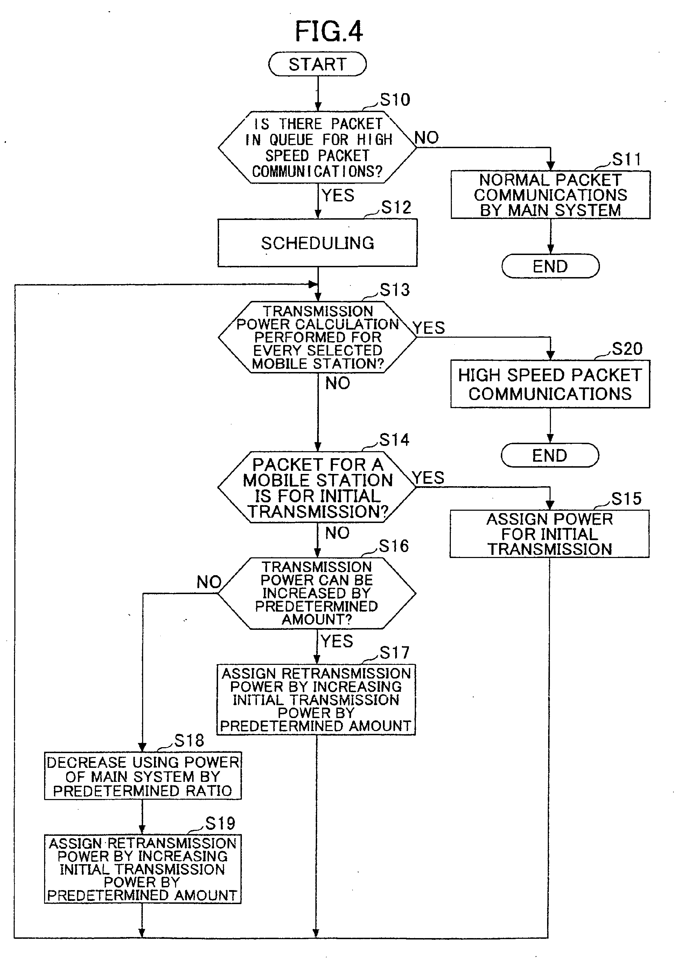

Fig.4 shows a flowchart of a power assigning process for high speed communication packets performed by the baseband unit 12 according to the first embodiment. This process is performed repeatedly at predetermined time intervals. First, it is determined whether there is a packet in the queue 42 for the high speed packet communications in step S10. When there is no packet in the queue 42, the process goes to step S11. In step S11, normal packet communication operation is performed only by the main system 30 so that this process cycle ends.

When there is a packet in the queue 41, the process goes to step S12 in which scheduling is performed. In this step, when the wireless base station apparatus performs high speed packet communications with several tens of mobile stations (channels), the subsystem 40 selects several mobile stations by performing the scheduling so as to perform high speed packet communications with the selected mobile stations using different channels at the same time interval.

The mobile station performing high speed packet communications periodically sends, to the wireless base station apparatus, ACK/NACK signal indicating receive result and receive quality that is CQI information for performing adaptive modulation control of HSDPA. The wireless base station apparatus 6 calculates an index value based on the line quality and transmission data rate so as to select mobile stations that become sending targets based on the index value and determine transmission speed and modulation scheme and the like for the mobile stations.

Next, in step S13, it is determined whether transmission power calculation is done for every selected mobile station. When the transmission power calculation is not yet done for every selected mobile station, the process goes to step S14. In step S14, it is determined whether a packet read from the queue 42 for transmission to one of the selected mobile stations is fcr initial transmission. When the packet is one read for initial transmission, the process goes to step S15. In step S15, a part of remained power that is not used for normal packet communications in the main system 30 is assigned to the initial transmission of the high speed packet communications. By the way, the remaining power (Z) is a result obtained by subtracting using power of the main system from the maximum transmission power of the wireless base station apparatus 6. Assuming that the number of the mobile stations performing high speed packet communications with different channels at the same time period is n, a power (B) equal to or less than Z/n is assigned to the initial transmission for high speed packet communications.

When the packet read from the queue 42 in step S14 is not for the initial transmission but is for retransmission, the process goes to step S16. In step S16, it is determined whether it is possible to increase the power for retransmitting the packet by an amount (α) from the power (B) of the initial transmission. Assuming that whole power of high speed packet communications at this time is X, it is determined that the power can be increased if X + α ≦ Z is satisfied. When it is determined that power increase is possible in step S16, the process goes to step S17 in which power increased by the amount (α) from the power (B) of the initial transmission is assigned to the retransmission of the high speed packet communications.

When power increase is determined to be impossible in step S16, the power used for normal packet communications in the main system 30 is decreased by a predetermined ratio (β) in step S18. In step S19, a power increased by the amount (α) from the power (B) of the initial transmission is assigned to the retransmission of the high speed packet communications. After step S15, step S17 or step S19 is performed, the process goes to step S13.

When transmission power calculation is completed for every selected mobile station in step S13, the process goes to step S20. In step S20, high Speed packet communications are performed for every selected mobile station, and this process cycle ends.

The maximum transmission power of the wireless base station apparatus 6 is about 43dBm, for example, and using power of the main system is about 38dBm for example. In addition, after-mentioned predetermined power (A) is about 30dBm for example, and the predetermined amount (α) is a value between 1 - 30dBm for example.

Accordingly, when the mobile station cannot receive a packet for high speed packet communications so that the wireless base station apparatus 6 retransmits the packet, the retransmission is performed with power that is increased by a predetermined amount from the power of the initial transmission. Therefore, receiving accuracy of the retransmitted packet increases so that it becomes possible to decrease repeated retransmissions of the packet.

### <Flowchart of a second embodiment of the power assigning process>

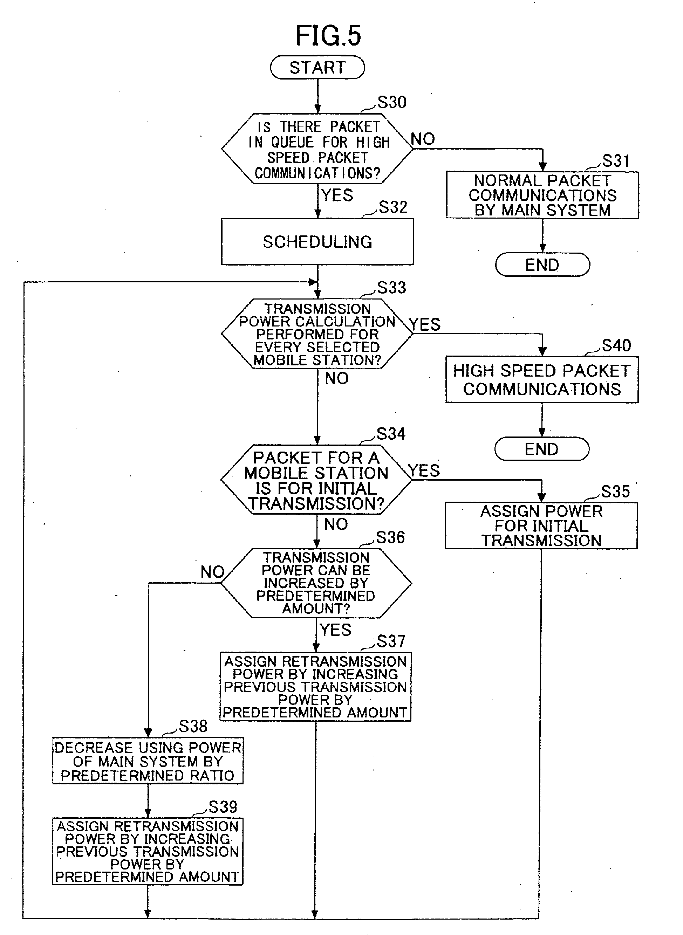

Fig.5 shows a flowchart of a power assigning process for high speed packet communications performed by the baseband unit 12 according to the second embodiment. This process is performed repeatedly at predetermined time intervals. First, it is determined whether there is a packet in the queue 42 for the high speed packet communications in step S30. When there is no packet in the queue 42, the process goes to step S31. In step S31, normal packet communication operation is performed only by the main system 30 so that this process cycle ends.

When there is a packet in the queue 41, the process goes to step S32 in which scheduling is performed. In this step, when the wireless base station apparatus performs high speed packet communications with several tens of mobile stations (channels), the subsystem 40 selects several mobile stations by performing scheduling so as to perform high speed packet communications with the selected mobile stations using different channels at the same time interval.

Next, it is determined whether transmission power calculation is done for every selected mobile station in step 533. When the transmission power calculation is not yet done for every selected mobile station, the process goes to step S34. In step S34, it is determined whether a packet read from the queue 42 for transmission to one of the selected mobile stations is for initial transmission. When the packet is read for initial transmission, the process goes to step S35. In step S35, a part of remained power that is not used for normal packet communication in the main system 30 is assigned to the initial transmission of the high speed packet communication. By the way, the remaining power (Z) is a result obtained by subtracting using power of the main system from the maximum transmission power of the wireless base station apparatus 6. Assuming that the number of the mobile stations performing high speed packet communications with different channels at the same time period is n and that a predetermined power is A, power (B) equal to or less than Z/n in which A is the maximum value for B is assigned to high speed packet communications of the initial transmission.

When the packet read from the queue 42 is not for the initial transmission but is for retransmission in step S34, the process goes to step S36. In step S36, it is determined whether it is possible to increase the power for sending the packet by an amount (α) from power (D) of previous transmission. Assuming that whole power of high speed packet communications at this time is X, it is determined that the power can be increased if X+α<Z is satisfied. When it is determined that power increase is possible in step S36, the process goes to step S37 in which power increased by the amount (α) from the power of the previous transmission is assigned to the retransmission of the high speed packet communications. That is, the power for initial transmission is B, the power for first retransmission is D=B+α and the power for second retransmission is D=B+2α, for example.

When power increase is determined to be impossible in step S36, the power used for normal packet communications in the main system 30 is decreased by a predetermined ratio (β) in step S38. In step S39, power increased by the amount (α) from the power of the previous transmission is assigned to the retransmission of the high speed packet communication. After step S35, step S37 or step S39 is performed, the process goes to step S33.

When transmission power calculation is completed for every selected mobile station in step S33, the process goes to step S40. In step S40, high speed packet communications are performed for every selected mobile station, and this process cycle ends.

Accordingly, when the mobile station cannot receive a packet for high speed packet communications so that the wireless base station apparatus 6 retransmits the packet, the retransmission is performed with power that is increased by a predetermined amount from the power of the previous transmission. Therefore, receiving accuracy of the retransmitted packet further increases so that it becomes possible to decrease further repeated retransmissions of the packet.

The present invention is not limited to the specifically disclosed embodiment, and variations and modifications may be made without departing from the scope of the present invention.

The present application contains subject matter related to Japanese patent application No.2006-334944, filed in the JPO on December 12, 2006.

## Claims

1. A power assigning method for a wireless base station apparatus (6) that includes a main system (30) for performing normal packet communications between the wireless base station apparatus (6) and mobile stations (7) and includes a subsystem (40) for performing high speed packet communications from the wireless base station apparatus (6) to the mobile stations (7), wherein the method is **characterised by** the steps of:
determining (S14, S34) whether high speed packet communications are for initial transmission or for retransmission;
assigning (S15, S35), as transmission power (B) for initial transmission of the high speed packet communications for a mobile station (7), a part of power obtained by subtracting power being used by the main system (30) from a maximum transmission power of the wireless base station apparatus (6);
increasing (S17, S37) transmission power to be assigned to retransmission of the high speed packet communications for the mobile station (7) by a predetermined amount (α) from power used in previous transmission, when the transmission power can be increased by the predetermined amount (α); and
increasing (S19, S39) transmission power to be assigned to the retransmission by decreasing (S18, S38) power used for the main system (30) when the transmission power cannot be increased by the predetermined amount (α).

2. The power assigning method as claimed in claim 1, wherein the power used in the previous transmission is transmission power (B) for the initial transmission.

3. A wireless base station apparatus (6) that includes a main system (30) for performing normal packet communications between the wireless base station apparatus (6) and mobile stations (7) and includes a subsystem (40) for performing high speed packet communications from the wireless base station apparatus (6) to the mobile stations (7), wherein the wireless base station apparatus (6) is **characterised by**:
a control unit (35) configured to determine whether high speed packet communications are for initial transmission or for retransmission;
an initial transmission power assigning unit configured to assign, as transmission power (B) for initial transmission of the high speed packet communications for a mobile station (7), a part of power obtained by subtracting power being used by the main system (30) from a maximum transmission power of the wireless base station apparatus (6);
a first transmission power increasing unit configured to increase transmission power to be assigned to retransmission of the high speed packet communications for the mobile station (7) by a predetermined amount (α) from power used in previous transmission when the transmission power can be increased by the predetermined amount (α); and
a second transmission power increasing unit configured to increase transmission power to be assigned to the retransmission by decreasing power used for the main system (30) when the transmission power cannot be increased by the predetermined amount (α).

4. The wireless base station apparatus (6) as claimed in claim 3, wherein the power used in the previous transmission is transmission power (B) for the initial transmission.

## Patentansprüche

1. Leistungszuteilungsverfahren für eine drahtlose Basisstationsvorrichtung (6), die ein Hauptsystem (30) zum Ausführen von normalen Paketkommunikationen zwischen der drahtlosen Basisstationsvorrichtung (6) und Mobilstationen (7) enthält und ein Subsystem (40) zum Ausführen von Hochgeschwindigkeitspaketkommunikationen von der drahtlosen Basisstationsvorrichtung (6) zu den Mobilstationen (7) enthält, welches Verfahren **gekennzeichnet ist durch** die Schritte:
Bestimmen (S14, S34), ob Hochgeschwindigkeitspaketkommunikationen für eine Erstsendung oder eine Wiederholungssendung vorgesehen sind;
Zuteilen (S15, S35), als Sendeleistung (B) für die Erstsendung der Hochgeschwindigkeitspaketkommunikationen für eine Mobilstation (7), eines Teils der Leistung, die **durch** Subtrahieren der Leistung, die **durch** das Hauptsystem (30) verwendet wird, von einer maximalen Sendeleistung der drahtlosen Basisstationsvorrichtung erhalten wird;
Erhöhen (S17, S37) der Sendeleistung, die der Wiederholungssendung der Hochgeschwindigkeitspaketkommunikationen für die Mobilstation (7) zuzuteilen ist, um einen vorbestimmten Betrag (α), von der Leistung, die bei einer vorherigen Sendung verwendet wurde, wenn die Sendeleistung um den vorbestimmten Betrag (α) erhöht werden kann; und
Erhöhen (S19, S39) der Sendeleistung, die der Wiederholungssendung zuzuteilen ist, **durch** Verringern (S18, S38) der Leistung, die für das Hauptsystem (30) verwendet wird, wenn die Sendeleistung nicht um den vorbestimmten Betrag (α) erhöht werden kann.

2. Leistungszuteilungsverfahren nach Anspruch 1, bei dem die bei der vorhergehenden Sendung verwendete Leistung eine Sendeleistung (B) für die Erstsendung ist.

3. Drahtlose Basisstationsvorrichtung (6), die ein Hauptsystem (30) zum Ausführen von normalen Paketkommunikationen zwischen der drahtlosen Basisstationsvorrichtung (6) und Mobilstationen (7) enthält und ein Subsystem (40) zum Ausführen von Hochgeschwindigkeitspaketkommunikationen von der drahtlosen Basisstationsvorrichtung (6) zu den Mobilstationen (7) enthält, welche drahtlose Basisstationsvorrichtung (6) **gekennzeichnet ist durch**:
eine Steuereinheit (35), die konfiguriert ist, um zu bestimmen, ob Hochgeschwindigkeitspaketkommunikationen für eine Erstsendung oder eine Wiederholungssendung vorgesehen sind;
eine Erstsendungsleistungszuteilungseinheit, die konfiguriert ist, um als Sendeleistung (B) für die Erstsendung der Hochgeschwindigkeitspaketkommunikationen für eine Mobilstation (7) einen Teil der Leistung zuzuteilen, die **durch** Subtrahieren der Leistung, die **durch** das Hauptsystem (30) verwendet wird, von einer maximalen Sendeleistung der drahtlosen Basisstationsvorrichtung (6) erhalten wird;
eine erste Sendeleistungserhöhungseinheit, die konfiguriert ist, um die Sendeleistung, die der Wiederholungssendung der Hochgeschwindigkeitspaketkommunikationen für die Mobilstation (7) zuzuteilen ist, um einen vorbestimmten Betrag (α) zu erhöhen, von der Leistung, die bei einer vorherigen Sendung verwendet wurde, wenn die Sendeleistung um den vorbestimmten Betrag (α) erhöht werden kann; und
eine zweite Sendeleistungserhöhungseinheit, die konfiguriert ist, um die Sendeleistung, die der Wiederholungssendung zuzuteilen ist, zu erhöhen, indem die Leistung, die für das Hauptsystem (30) verwendet wird, verringert wird, wenn die Sendeleistung nicht um den vorbestimmten Betrag (α) erhöht werden kann.

4. Drahtlose Basisstationsvorrichtung (6) nach Anspruch 3, bei der die bei der vorhergehenden Sendung verwendete Leistung die Sendeleistung (B) für die Erstsendung ist.

## Revendications

1. Procédé d'affectation de puissance pour un appareil de station de base sans fil (6) qui comprend un système principal (30) destiné à effectuer des communications par paquet normales entre l'appareil de station de base sans fil (6) et des stations mobiles (7) et comprend un sous-système (40) destiné à effectuer des communications par paquet à vitesse élevée depuis l'appareil de station de base sans fil (6) vers les stations mobiles (7), dans lequel le procédé est **caractérisé par** les étapes consistant à :
déterminer (S14, S34) si les communications par paquet à vitesse élevée sont destinées à une transmission initiale ou à une retransmission ;
affecter (S15, S35), comme puissance de transmission (B) pour la transmission initiale des communications par paquet à vitesse élevée pour une station mobile (7), une partie de la puissance obtenue en soustrayant la puissance utilisée par le système principal (30) d'une puissance de transmission maximale de l'appareil de station de base sans fil (6) ;
augmenter (S17, S37) la puissance de transmission à affecter à la retransmission des communications par paquet à vitesse élevée pour la station mobile (7) d'une quantité prédéfinie (α) à partir de la puissance utilisée lors de la transmission précédente, lorsque la puissance de transmission peut être augmentée de la quantité prédéfinie (α) et
augmenter (S19, S39) la puissance de transmission à affecter à la retransmission en diminuant (S18, S38) la puissance utilisée pour le système principal (30) lorsque la puissance de transmission ne peut pas être augmentée de la quantité prédéfinie (α).

2. Procédé d'affectation de puissance selon la revendication 1, dans lequel la puissance utilisée lors de la transmission précédente est la puissance de transmission (B) destinée à la transmission initiale.

3. Appareil de station de base sans fil (6) qui comprend un système principal (30) destiné à effectuer des communications par paquet normales entre l'appareil de station de base sans fil (6) et des stations mobiles (7) et comprend un sous-système (40) destiné à effectuer des communications par paquet à vitesse élevée depuis l'appareil de station de base sans fil (6) vers les stations mobiles (7), l'appareil de station de base sans fil (6) étant **caractérisé par** :
une unité de commande (35) configurée pour déterminer si les communications par paquet à vitesse élevée sont destinées à une transmission initiale ou à une retransmission ;
une unité d'affectation de puissance de transmission initiale configurée pour affecter, comme puissance de transmission (B) pour la transmission initiale des communications par paquet à vitesse élevée pour une station mobile (7), une partie de la puissance obtenue en soustrayant la puissance utilisée par le système principal (30) d'une puissance de transmission maximale de l'appareil de station de base sans fil (6) ;
une première unité d'augmentation de puissance de transmission configurée pour augmenter la puissance de transmission à affecter à la retransmission des communications par paquet à vitesse élevée pour la station mobile (7) d'une quantité prédéfinie (α) à partir de la puissance utilisée lors de la transmission précédente, lorsque la puissance de transmission peut être augmentée de la quantité prédéfinie (α) ; et
une seconde unité d'augmentation de puissance de transmission configurée pour augmenter la puissance de transmission à affecter à la retransmission en diminuant la puissance utilisée pour le système principal (30) lorsque la puissance de transmission ne peut pas être augmentée de la quantité prédéfinie (α).

4. Appareil de station de base sans fil (6) selon la revendication 3, dans lequel la puissance utilisée lors de la transmission précédente est la puissance de transmission (B) destinée à la transmission initiale.
